# EUROPÄISCHE PATENTSCHRIFT

(11) **EP 1 373 408 B1**
(45) Veröffentlichungstag und Bekanntmachung des Hinweises auf die Patenterteilung: **23.05.2007**
(21) Anmeldenummer: 02712905.5
(22) Anmeldetag: 13.02.2002
(51) Int. Cl.: C08L 69/00, C08L 51/00

(54) **FLAMMWIDRIGE POLYCARBONAT-ZUSAMMENSETZUNGEN MIT ERHÖHTER CHEMIKALIENBESTÄNDIGKEIT**
FLAMEPROOF POLYCARBONATE COMPOSITIONS WITH INCREASED CHEMICAL STABILITY
COMPOSITIONS DE POLYCARBONATE ININFLAMMABLES A RESISTANCE CHIMIQUE ELEVEE

(30) Priorität: 26.02.2001 DE 10109224
(43) Veröffentlichungstag der Anmeldung: 02.01.2004
(73) Patentinhaber: Bayer MaterialScience AG, 51368 Leverkusen (DE)
(72) Erfinder: ZOBEL, Michael, 50823 Köln (DE); SEIDEL, Andreas, 41542 Dormagen (DE); ECKEL, Thomas, 41540 Dormagen (DE); DERR, Torsten, 41541 Dormagen (DE); WITTMANN, Dieter, 51375 Leverkusen (DE)
(86) Internationale Anmeldenummer: PCT/EP2002/001465
(87) Internationale Veröffentlichungsnummer: WO 2002/068533

(56) Entgegenhaltungen:
- DE-A- 19 853 105
- US-A- 4 629 760

## Beschreibung

Die Erfindung betrifft flammwidrige und schlagzähe Polycarbonat-Zusammensetzungen mit erhöhter Chemikalienbeständigkeit und daraus hergestellte Formkörper.

Mischungen, die Polycarbonate, Pfropfcopolymerisate wie ABS sowie Copolymerisate auf der Basis von Styrol enthalten, werden für viele Anwendungen, beispielsweise im Automobil-, Elektro- und Datentechnikbereich oder im Haushalts- oder Sportsektor eingesetzt. Für viele Anwendungsbereiche werden die Kunststoffe flammwidrig ausgerüstet. Bei bestimmten Anwendungen, insbesondere in Bereichen, in denen die Kunststoffe in direkten Kontakt mit Chemikalien wie Lösungsmitteln, Fetten, Ölen, Säuren oder Reinigungsmitteln treten, ist es außerdem erforderlich, daß diese neben einem hervorragenden Flammwidrigkeitsverhalten auch eine ausgezeichnete Spannungsrißbeständigkeit (d.h. ein gutes ESC-Verhalten) aufweisen. Dies ist etwa bei Gehäuseteilen von Büromaschinen und Küchenmaschinen der Fall, die oft dem Einfluß von Fetten und Ölen bzw. diese enthaltenen Lebensmitteln ausgesetzt sind. Die für diese Zwecke eingesetzten Kunststoffe müssen bestimmte Brandschutzauflagen erfüllen. So ist es beispielsweise für bestimmte dünnwandige Anwendungen erforderlich, daß die Gehäuseteile den Flammwidrigkeitstest gemäß UL94 V bei Wandstärken von weniger als 1,6 mm mit der Note "V0" bestehen.

Um die Flammwidrigkeit sowie die mechanischen und rheologischen Eigenschaften von Polycarbonat-Zusammensetzungen gezielt zu beeinflussen, werden den Zusammensetzungen bestimmte Hilfsstoffe wie Flammschutzmittel, Weichmacher oder anorganische Materialien zugesetzt. Die einzelnen Hilfsstoffe beeinflussen häufig mehrere Eigenschaften des Materials gegenläufig. Beispielsweise geht mit der Verbesserung der Fließfähigkeit einer Polycarbonat-Formmasse durch Zugabe von Weichmachern in der Regel eine Verschlechterung der Wärmeformbeständigkeit, z.B. gemessen nach Vicat B, einher. Es hat sich daher als schwierig erwiesen, geeignete Polycarbonat-Zusammensetzungen mit einem ausgewogenen Eigenschaftsprofil herzustellen.

Flammwidrige Polycarbonat/ABS-Zusammensetzungen sind aus zahlreichen Anwendungen bekannt. So beschreiben beispielsweise die US-A 5 157 065, US-A 5 204 394 und US-A 5 672 645 flammwidrige Polycarbonat/ABS-Formmassen, die als Flammschutzmittel organische Phosphorverbindungen wie Monophosphorsäureester, Oligophosphorsäureester oder Mischungen hiervon sowie als Antidrippingmittel fluorierte Polyolefine enthalten. Die in diesen Druckschriften beschriebenen Formmassen erzielen im UL94 V-Brandtest eine Bewertung V0 bei einer Wandstärke von 1,6 mm. Für manche Anwendungen, wie beispielsweise bestimmte dünnwandige Gehäuseteile, ist diese Klassifizierung oft nicht ausreichend. Hier wird zunehmend eine V0-Bewertung auch bei Wandstärken von weniger als 1,6 mm bei gleichzeitig guten mechanischen und rheologischen Eigenschaften sowie exzellenter Chemikalienresistenz gefordert.

Aus der WO 99/07782 A sind flammgeschützte Polycarbonat/ABS-Formmassen bekannt, die eine oligomere Phosphorsäureesterverbindung auf Basis von Bisphenol-A und eine feinstverteilte anorganische Verbindung enthalten. Die beschriebenen Formmassen zeichnen sich durch verbesserte mechanische Eigenschaften (Kerbschlagzähigkeit, Spannungsrißverhalten) bei guter Wärmeformbeständigkeit aus. Nachteilig an diesen Formmassen ist jedoch, daß eine ausreichende Flammwidrigkeit bei Wandstärken von weniger als 1,6 mm, wie sie für Dünnwandapplikationen erforderlich ist, nicht erreicht wird.

In der EP-A 0 780 438 wird vorgeschlagen, zur Verbesserung der Flammwidrigkeit, Zähigkeit und Fließfähigkeit von Polycarbonat/ABS-Formmassen diesen neben einer halogenfreien Phosphorverbindung als Flammschutzmittel einen Polyhydroxyether als Flammschutz-Synergisten zuzusetzen. Als Phosphorverbindung werden bevorzugt monomere Organophosphorsäureester oder solche oligomeren Organophosphorsäureester, die sich von Resorcin und Hydrochinon ableiten, eingesetzt. Die beschriebenen Formmassen zeichnen sich durch eine verbesserte Fließfähigkeit und Schlagzähigkeit sowie eine geringe Neigung zur Rißbildung bei Stoßbeanspruchung aus. Aus den Beispielen geht hervor, daß bei den hergestellten Polycarbonat/ABS-Formmassen die Nachbrennzeiten im UL94 V-Test bei einer Wandstärke von 1,7 mm zwar durch den Zusatz des Polyhydroxyethers meßbar reduziert werden, jedoch mit Werten von mehr als 50 Sekunden die Bewertung V0 nicht erreicht wird. Nachteilig an den beschriebenen Formmassen ist ferner, daß sie eine unzureichende Lösungsmittelbeständigkeit (ESC-Verhalten) aufweisen.

In der US-A. 5 849 827 werden schließlich flammgeschützt eingestellte Polycarbonat/ABS-Fonmmassen beschrieben, bei denen durch Zugabe kleiner Mengen eines anorganischen Pulvers in nanoverteilter Form eine Verkürzung der Nachbrennzeit erreicht wird.

Nachteilig an den aus dem Stand der Technik bekannten flammwidrigen Polycarbonat/ABS-Zusammensetzungen ist, daß sie entweder eine zu geringe Flammwidrigkeit bei geringen Wandstärken oder, wenn sie hinreichend flammwidrig ausgerüstet sind, unzureichende mechanische und/oder rheologische Eigenschaften wie Fließfähigkeit und/oder eine zu geringe Wärmeformbeständigkeit besitzen. Insbesondere hat es sich als außerordentlich schwierig erwiesen, hinreichend flammgeschützte Polycarbonat/ABS-Zusammensetzungen herzustellen, die neben einer guten Fließfähigkeit, Zähigkeit und Wärmeformbeständigkeit auch eine ausreichende Lösungsmittelbeständigkeit (d.h. ein gutes ESC-Verhalten) aufweisen.

Aufgabe der Erfindung ist es, eine flammgeschützte Polycarbonat-Zusammensetzung mit deutlich verbessertem ESC-Verhalten bei gleichzeitig guter Zähigkeit, hoher Wärmeformbeständigkeit und gutem Verarbeitungsverhalten bereitzustellen. Die Polycarbonat-Zusammensetzungen sollen auch bei Wandstärken von weniger als 1,6 mm die Bewertung V0 im UL94 V-Flammwidrigkeitstest erreichen. Sie sollen sich durch eine gute Fließfähigkeit auszeichnen und bei der Verarbeitung im Spritzgußverfahren nicht zu unerwünschten Werkzeugbelägen durch Ausbluten des Flammschutz-Additivs, dem sogenannten "Juicing", führen.

Diese Aufgabe wird erfindungsgemäß gelöst durch eine Polycarbonat-Zusammensetzung bestehend aus
(A) mindestens ein aromatisches Polycarbonat und/oder Polyestercarbonat,
(B) mindestens ein Pfropfpolymerisat von
   B.1 5 bis 95 Gew.% eines Gemisches aus
   B.1.1 50 bis 99 Gew.-Teilen Vinylaromaten und/oder kernsubstituierten Vinylaromaten und
   B.1.2 1 bis 50 Gew.-Teilen Vinylcyanide
      auf
   B.2 95 bis 5 Gew.% einer oder mehrerer Pfropfgrundlagen ausgewählt aus der Gruppe bestehend aus Dienkautschuke, EP(D)M-Kautschuke, Polyurethan-, Silikon-, Chloropren- und Ethylen/Vinylacetat-Kautschuke mit Glasübergangstemperaturen < 10°C,
(C) mindestens eine Phosphorverbindung der allgemeinen Formel 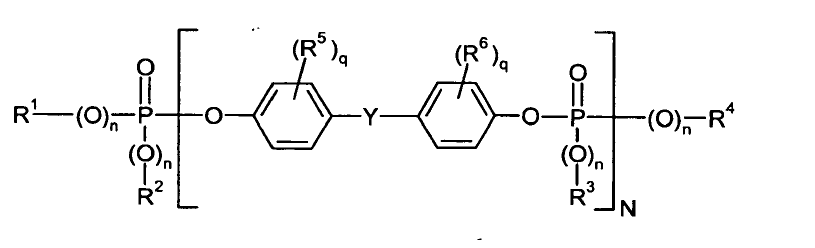 in der die Reste
   - R¹, R², R³ und R⁴,: unabhängig voneinander, gegebenenfalls durch Halogen substituiertes C₁ bis C₈-Alkyl, jeweils gegebenenfalls durch Halogen und/oder Alkyl substituiertes C₅ bis C₆-Cycloalkyl, C₆ bis C₁₀-Aryl oder C₇ bis C₁₂-Aralkyl,
   - n: unabhängig voneinander 0 oder 1,
   - q: unabhängig voneinander 0, 1, 2, 3 oder 4,
   - N: 0,5 bis 30,
   - R⁵ und R⁶: unabhängig voneinander C₁ bis C₄-Alkyl, oder Halogen, und
   - Y: C₁ bis C₇-Alkyliden, C₁ bis C₇-Alkylen, C₅ bis C₁₂-Cycloalkylen, C₅ bis C₁₂-Cycloalkyliden, -O-, -S-, -SO-, -SO₂- oder -CO- bedeuten,
(D) mindestens ein Antidrippingmittel und
(E) mindestens einen Polyhydroxyether,
(F) gegebenenfalls ein thermoplastisches Vinyl(Co)Polymerisat aus
   F.1.1 50 bis 99 Gew.-Teilen Vinylaromaten und/oder kernsubstituierten Vinylaromaten und
   F.1.2 1 bis 50 Gew.-Teilen Vinylcyanide (ungesättigte Nitrile).
   und/oder Polyalkylenterephthalat,
(G) gegebenenfalls ein feinstteiliges anorganisches Pulver enthalten, und
(H) gegebenenfalls ein Polymer-Additiv, ausgewählt aus Gleit- und Entformungsmitteln, Nukleiermitteln, Antistatika, Stabilisatoren, Füll- und Verstärkungsstoffen sowie Farbstoffen und Pigmenten.

Überraschend wurde gefunden, daß durch das gleichzeitige Vorhandensein von Polyhydroxyether E und der bestimmten Phosphorverbindung C in der Polycarbonat-Zusammensetzung ein ausgezeichnetes ESC-Verhalten bei gleichzeitig guten Verarbeitungseigenschaften erzielt wird. Es wurde ferner überraschend gefunden, daß das ESC-Verhalten analoger Zusammensetzungen bei Verwendung anderer Phosphorverbindungen, wie sie in der EP-A 0 780 438 A eingesetzt werden, z.B. Triphenylphosphat (TPP) oder Resorcinololigophosphat (RDP), deutlich schlechter ausfällt. Mit aus den erfindungsgemäBen Polycarbonat-Zusammensetzungen hergestellten Prüfkörpern werden V0-Bewertungen im UL94 V-Test bei 1,5 mm und sogar auch bei 1,2 mm erzielt. Gleichzeitig weisen die erfindungsgemäßen Polycarbonat-Zusammensetzungen eine erheblich verbesserte Beständigkeit gegenüber Toluol/Isopropanol-Mischungen unter Spannung auf, so daß sie beispielsweise zur Herstellung von flammwidrigen, dünnwandigen Formteilen geeignet sind, bei denen hohe Anforderungen an das ESC-Verhalten gestellt werden.

Im folgenden werden die in der erfindungsgemäßen Polymer-Zusammensetzung eingesetzten Komponenten näher beschrieben:

### Komponente A

Erfindungsgemäß geeignete aromatische Polycarbonate und/oder aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate, z. B. DE-A 3 077 934).

Die Herstellung aromatischer Polycarbonate erfolgt z.B. durch Umsetzung von Diphenolen mit Kohlensäurehalogeniden, vorzugsweise Phosgen und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und gegebenenfalls unter Verwendung von trifunktionellen oder mehr als trifunktionellen Verzweigern, beispielsweise Triphenolen oder Tetraphenolen.

Diphenole zur Herstellung der aromatischen Polycarbonate und/oder aromatischen Polyestercarbonate sind vorzugsweise solche der Formel (I) 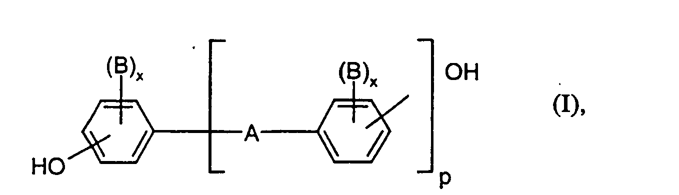 wobei
- A: eine Einfachbindung, C₁ bis C₅-Alkylen, C₂ bis C₅-Alkyliden, C₅ bis C₆-Cycloalkyliden, -O-, -SO-, -CO-, -S-, -SO₂-, C₆ bis C₁₂-Arylen, an das weitere aromatische gegebenenfalls Heteroatome enthaltende Ringe kondensiert sein können,
oder ein Rest der Formel (II) oder (III) 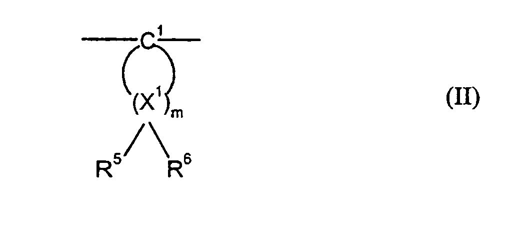 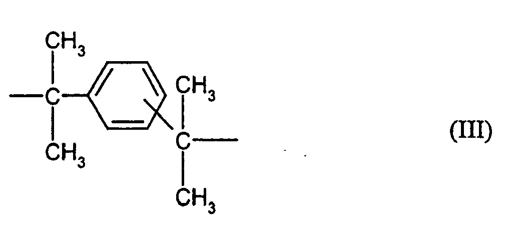
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und

- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)-propan.

Insbesondere bevorzugt ist 2,2-Bis-(4-hydroxyphenyl)-propan (Bisphenol-A).

Es können die Diphenole einzeln oder als beliebige Mischungen eingesetzt werden.

Die Diphenole sind literaturbekannt oder nach literaturbekannten Verfahren erhältlich.

Für die Herstellung der thermoplastischen, aromatischen Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-A 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 Mol%, und 10 Mol%, bezogen auf die Molsumme der jeweils eingesetzten Diphenole.

Die thermoplastischen, aromatischen Polycarbonate haben mittlere Gewichtsmittelmolekulargewichte (M_{w}, gemessen z. B. durch Ultrazentrifuge oder Streulichtmessung) von 10.000 bis 200.000, vorzugsweise 15.000 bis 80.000.

Die thermoplastischen, aromatischen Polycarbonate können in bekannter Weise verzweigt sein, und zwar vorzugsweise durch den Einbau von 0,05 bis 2,0 Mol%, bezogen auf die Summe der eingesetzten Diphenole, an dreifunktionellen oder mehr als dreifunktionellen Verbindungen, beispielsweise solchen mit drei und mehr phenolischen Gruppen.

Geeignet sind sowohl Homopolycarbonate als auch Copolycarbonate. Zur Herstellung erfindungsgemäßer Copolycarbonate gemäß Komponente A können auch 1 bis 25 Gew.%, vorzugsweise 2,5 bis 25 Gew.% (bezogen auf die Gesamtmenge an einzusetzenden Diphenolen) Polydiorganosiloxane mit Hydroxyaryloxy-Endgruppen eingesetzt werden. Diese sind bekannt (US 3 419 634) und nach literaturbekannten Verfahren herstellbar. Die Herstellung Polydiorganosiloxanhaltiger Copolycarbonate ist in der DE A 3 334 782 beschrieben.

Bevorzugte Polycarbonate sind neben den Bisphenol-A-Homopolycarbonaten die Copolycarbonate von Bisphenol-A mit bis zu 15 Mol%, bezogen auf die Molsummen an Diphenolen, anderen als bevorzugt oder besonders bevorzugt genannten Diphenolen, insbesondere 2,2-Bis(3,5-dibrom-4-hydroxyphenyl)-propan.

Aromatische Dicarbonsäuredihalogenide zur Herstellung von aromatischen Polyestercarbonaten sind vorzugsweise die Disäuredichloride der Isophthalsäure, Terephthalsäure, Diphenylether-4,4'-dicarbonsäure und der Naphthalin-2,6-dicarbonsäure.

Besonders bevorzugt sind Gemische der Disäuredichloride der Isophthalsäure und der Terephthalsäure im Verhältnis zwischen 1:20 und 20:1.

Bei der Herstellung von Polyestercarbonaten wird zusätzlich ein Kohlensäurehalogenid, vorzugsweise Phosgen, als bifunktionelles Säurederivat mit verwendet.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁-C₂₂-Alkylgruppen oder durch Halogenatome substituiert sein können, sowie aliphatische C₂-C₂₂-Monocarbonsäurechloride in Betracht.

Die Menge an Kettenabbrechern beträgt jeweils 0,1 bis 10 Mol%, bezogen im Falle der phenolischen Kettenabbrecher auf Mol Diphenol und im Falle von Monocarbonsäurechlorid-Kettenabbrecher auf Mol Dicarbonsäuredichloride.

Die aromatischen Polyestercarbonate können auch aromatische Hydroxycarbonsäuren eingebaut enthalten.

Die aromatischen Polyestercarbonate können sowohl linear als auch in bekannter Weise verzweigt sein (siehe dazu DE-A 2 940 024 und DE-A 3 007 934).

Als Verzweigungsmittel können beispielsweise drei- oder mehrfunktionelle Carbonsäurechloride, wie Trimesinsäuretrichlorid, Cyanursäuretrichlorid, 3,3'-,4,4'-Benzophenontetracarbonsäuretetrachlorid,1,4,5,8-Napthalintetracarbonsäuretetrachlorid oder Pyromellithsäuretetrachlorid, in Mengen von 0,01 bis 1,0 Mol%, bezogen auf eingesetzte Dicarbonsäuredichloride, oder drei- oder mehrfunktionelle Phenole, wie Phloroglucin, 4,6-Dimethyl-2,4,6-tri-(4-hydroxyphenyl)-hepten-2,4,4-Dimethyl-2,4-6-tri-(4-hydroxyphenyl)-heptan, 1,3,5-Tri-(4-hydroxyphenyl)-benzol, 1,1,1-Tri-(4-hydroxy-phenyl)-ethan, Tri-(4-hydroxyphenyl)-phenylmethan, 2,2-Bis[4,4-bis(4-hydroxy-phenyl)-cyclohexyl]-propan, 2,4-Bis(4-hydroxyphenyl-isopropyl)-phenol, Tetra-(4-hydroxyphenyl)-methan, 2,6-Bis(2-hydroxy-5-methyl-benzyl)-4-methylphenol, 2-(4-Hydroxyphenyl)-2-(2,4-dihydroxyphenyl)-propan, Tetra-(4-[4-hydroxyphenyl-iso-propyl]-phenoxy)-methan, 1,4-Bis[4,4'-dihydroxytri-phenyl)-methyl]-benzol, in Mengen von 0,01 bis 1,0 Mol% bezogen auf eingesetzte Diphenole verwendet werden. Phenolische Verzweigungsmittel können mit den Diphenolen vorgelegt, Säurechlorid-Verzweigungsmittel können zusammen mit den Säuredichloriden eingetragen werden.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 Mol%, insbesondere bis zu 80 Mol%, besonders bevorzugt bis zu 50 Mol%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die relative Lösungsviskosität (ηᵣₑₗ) der aromatischen Polycarbonate und Polyestercarbonate liegt im Bereich 1,18 bis 1,4, vorzugsweise 1,20 bis 1,32 (gemessen an Lösungen von 0,5 g Polycarbonat oder Polyestercarbonat in 100 ml Methylenchlorid-Lösung bei 25°C).

Die thermoplastischen, aromatischen Polycarbonate und Polyestercarbonate können allein oder im beliebigen Gemisch eingesetzt werden.

Die Komponente A kann in der erfindungsgemäßen Zusammensetzung in einer Menge von vorzugsweise 5 bis 98,9 Gew.%, besonders bevorzugt 10 bis 90 Gew.% und in am meisten bevorzugter Weise 40 bis 80 Gew.%, bezogen auf die Masse der Zusammensetzung, enthalten sein.

### Komponente B

Die Komponente B umfasst ein oder mehrere Pfropfpolymerisate von
B.1 5 bis 95, vorzugsweise 30 bis 90 Gew.%, wenigstens eines Vinylmonomeren auf
B.2 95 bis 5, vorzugsweise 70 bis 10 Gew.% einer oder mehrerer Pfropfgrundlagen mit Glasübergangstemperaturen < 10°C, vorzugsweise < 0°C, besonders bevorzugt < -20°C.

Die Pfropfgrundlage B.2 hat im allgemeinen eine mittlere Teilchengröße (d₅₀-Wert) von 0,05 bis 10 µm, vorzugsweise 0,1 bis 8 µm, besonders bevorzugt 0,2 bis 5 µm.

Monomere B.1 sind vorzugsweise Gemische aus
B.1.1 50 bis 99 Gew.-Teilen Vinylaromaten und/oder kernsubstituierten Vinylaromaten (wie beispielsweise Styrol, α-Methylstyrol, p-Methylstyrol, p-Chlorstyrol) und
B.1.2 1 bis 50 Gew.-Teilen Vinylcyanide (ungesättigte Nitrile wie Acrylnitril und Methacrylnitril).

Bevorzugte Monomere B.1.1 sind ausgewählt aus mindestens einem der Monomere Styrol und α-Methylstyrol, bevorzugtes Monomer B.1.2 ist Acrylnitril.

Besonders bevorzugte Monomere sind B.1.1 Styrol und B.1.2 Acrylnitril.

Für die Pfropfpolymerisate B geeignete Pfropfgrundlagen B.2 sind beispielsweise Dienkautschuke, EP(D)M-Kautschuke, also solche auf Basis Ethylen/Propylen und gegebenenfalls Dien, Polyurethan-, Silikon-, Chloropren und Ethylen/Vinylacetat-Kautschuke.

Bevorzugte Pfropfgrundlagen B.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß B.1.1 und B.1.2), mit der Maßgabe, dass die Glasübergangstemperatur der Komponente B.2 unterhalb < 10°C, vorzugsweise < 0°C, besonders bevorzugt < -10°C liegt.

Besonders bevorzugt ist reiner Polybutadienkautschuk.

Besonders bevorzugte Polymerisate B sind z.B. ABS-Polymerisate (Emulsions-, Masse- und Suspensions-ABS), wie sie z.B. in der DE-A 2 035 390 (=US-PS 3 644 574) oder in der DE-A 2 248 242 (=GB-PS 1 409 275) bzw. in Ullmanns, Enzyklopädie der Technischen Chemie, Bd. 19 (1980), S. 280 ff. beschrieben sind. Der Gelanteil der Pfropfgrundlage B.2 beträgt mindestens 30 Gew.%, vorzugsweise mindestens 40 Gew.% (in Toluol gemessen).

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation hergestellt. Besonders bevorzugt ist Masse-ABS.

Besonders geeignete Pfropfkautschuke sind auch ABS-Polymerisate, die durch Redox-Initiierung mit einem Initiatorsystem aus organischem Hydroperoxid und Ascorbinsäure gemäß US-P 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten B auch solche Produkte verstanden, die durch (Co)Polymerisation der Pfropfmonomere in Gegenwart der Pfropfgrundlage gewonnen werden und bei der Aufarbeitung mit anfallen.

Zur Vernetzung können Monomere mit mehr als einer polymerisierbaren Doppelbindung copolymerisiert werden. Bevorzugte Beispiele für vernetzende Monomere sind mehrfach ungesättigte heterocyclische Verbindungen, wie Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind heterocyclische Verbindungen, die mindestens drei ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.%, bezogen auf die Pfropfgrundlage B.2.

Bei cyclischen vernetzenden Monomeren mit mindestens drei ethylenisch ungesättigten Gruppen ist es vorteilhaft, die Menge auf unter 1 Gew.% der Pfropfgrundlage B.2 zu beschränken.

Weitere geeignete Pfropfgrundlagen gemäß B.2 sind Silikonkautschuke mit pfropfaktiven Stellen, wie sie in den DE-A 3 704 657, DE-A 3 704 655, DE-A 3 631 540 und DE-A 3 631 539 beschrieben werden.

Der Gelgehalt der Pfropfgrundlage B.2 wird bei 25°C in einem geeigneten Lösungsmittel bestimmt (M. Hoffmann, H. Krömer, R. Kuhn, Polymeranalytik I und II, Georg Thieme-Verlag, Stuttgart 1977).

Die mittlere Teilchengröße d₅₀ ist der Durchmesser, oberhalb und unterhalb dessen jeweils 50 Gew.% der Teilchen liegen. Er kann mittels Ultrazentrifugenmessung (W. Scholtan, H. Lange, Kolloid, Z. und Z. Polymere 250 (1972), 782-1796) bestimmt werden.

Die Komponente B kann in der erfindungsgemäßen Zusammensetzung in einer Menge von vorzugsweise 1 bis 94,9 Gew.%, besonders bevorzugt 2 bis 40 Gew.% und in am meisten bevorzugter Weise 5 bis 25 Gew.%, bezogen auf die Masse der Zusammensetzung, enthalten sein.

### Komponente C

Die erfindungsgemäßen Zusammensetzungen enthalten als Flammschutzmittel oligomere organische Phosphorsäureester auf Basis von Bisphenol-A oder auf Basis von dazu analogen bisphenolischen Verbindungen. Diese Verbindungen weist die folgende Formel auf, 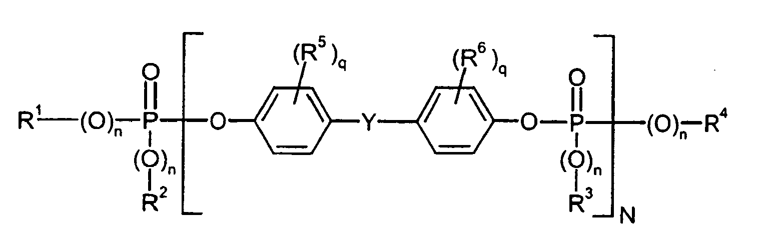 in der die Reste
- R¹, R², R³ und R⁴,: unabhängig voneinander, gegebenenfalls durch Halogen substituiertes C₁ bis C₈-Alkyl, jeweils gegebenenfalls durch Halogen und/oder Alkyl substituiertes C₅ bis C₆-Cycloalkyl, C₆ bis C₁₀-Aryl oder C₇ bis C₁₂-Aralkyl,
- n: unabhängig voneinander 0 oder 1,
- q: unabhängig voneinander 0, 1, 2, 3 oder 4,
- N: 0,5 bis 30, vorzugsweise 0,7 bis 15, insbesondere 0,9 bis 5,
- R⁵ und R⁶: unabhängig voneinander C₁ bis C₄-Alkyl, vorzugsweise Methyl, oder Halogen, vorzugsweise Chlor und/oder Brom, und
- Y: C₁ bis C₇-Alkyliden, C₁ bis C₇-Alkylen, C₅ bis C₁₂-Cycloalkylen, C₅ bis C₁₂-Cycloalkyliden, -O-, -S-, -SO-, -SO₂- oder -CO- bedeuten.

Die erfindungsgemäß geeigneten Phosphorverbindungen gemäß Komponente C sind generell bekannt (s. beispielsweise Ullmanns Enzyklopädie der Technischen Chemie, Bd. 18, S. 301 ff. 1979; Houben-Weyl, Methoden der Organischen Chemie, Bd. 12/1, S. 43; Beistein, Bd. 6, S. 177).

Bevorzugte Substituenten R¹ bis R⁴ umfassen Methyl, Butyl, Octyl, Chlorethyl, 2-Chlorpropyl, 2,3-Dibrompropyl, Phenyl, Kresyl, Cumyl, Naphthyl, Chlorphenyl, Bromphenyl, Pentachlorphenyl und Pentabromphenyl. Besonders bevorzugt sind Methyl, Ethyl, Butyl, Phenyl und Naphthyl.

Die aromatischen Gruppen R¹, R², R³ und R⁴ können mit Halogen und/oder C₁ bis C₄-Alkyl substituiert sein. Besonders bevorzugte Aryl-Reste sind Kresyl, Phenyl, Xylenyl, Propylphenyl oder Butylphenyl sowie auch die bromierten und chlorierten Derivate davon.

R⁵ und R⁶ bedeuten unabhängig voneinander vorzugsweise Methyl oder Brom.

Y steht vorzugsweise für C₁ bis C₇-Alkylen, insbesondere für Isopropyliden oder Methylen, -SO₂- oder C₅ bis C₁₂-Cycloalkylen.

n kann einen Wert von 0 oder 1 haben. Vorzugsweise ist n gleich 1.

q kann 0, 1, 2, 3 oder 4 sein, vorzugsweise ist q 0, 1 oder 2, besonders bevorzugt ist q=0.

N kann Werte von 0,5 bis 30, vorzugsweise 0,7 bis 15, insbesondere 0,9 bis 5 annehmen. Als erfindungsgemäße Komponente C können auch Mischungen verschiedener Phosphate eingesetzt werden. In diesem Fall hat N einen Durchschnittswert in den zuvor genannten Intervallen und Vorzugsbereichen. In diesem Gemisch können auch Monophosphorverbindungen (N=O) enthalten sein.

Die mittleren N-Werte können bestimmt werden, in dem mittels geeigneter Methode [Gaschromatografie (GC), High Pressure Liquid Chromatography (HPLC), Gaspermeationschromatographie (GPC)] die Zusammensetzung der Phosphat-Mischung (Molekulargewichtsverteilung) bestimmt wird und daraus die Mittelwerte für N berechnet werden.

Die Komponente C kann in der erfindungsgemäßen Zusammensetzung in einer Menge von vorzugsweise 0,01 bis 40 Gew.%, insbesondere von 1 bis 25 Gew.%, besonders bevorzugt von 2 bis 20 Gew.%, bezogen auf die Masse der Zusammensetzung, enthalten sein.

### Komponente D

Das erfindungsgemäße Flammschutzmittel gemäß Komponente C wird in Kombination mit sogenannten Antidrippingmitteln verwendet, welche die Neigung des Materials zum brennenden Abtropfen im Brandfall verringern. Beispielhaft seien hier Verbindungen der Substanzklassen der fluorierten Polyolefine, der Silikone sowie Aramidfasern genannt. Diese können auch in den erfindungsgemäßen Zusammensetzungen zum Einsatz kommen. Bevorzugt werden in den erfindungsgemäßen Zusammensetzungen fluorierte Polyolefine als Antidrippingmittel eingesetzt.

Fluorierte Polyolefine sind bekannt und beispielsweise in der EP-A 0 640 655 beschrieben. Sie werden unter der Marke Teflon^{®} 30N von DuPont vertrieben.

Die fluorierten Polyolefine können sowohl in reiner Form als auch in Form einer koagulierten Mischung von Emulsionen der fluorierten Polyolefine mit Emulsionen der Pfropfpolymerisate (Komponente B) oder mit einer Emulsion eines Copolymerisats, vorzugsweise auf Styrol/Acrylnitril-Basis eingesetzt werden, wobei das fluorierte Polyolefin als Emulsion mit einer Emulsion des Pfropfpolymerisats oder des Copolymerisats gemischt und anschließend koaguliert wird.

Weiterhin können die fluorierten Polyolefine als Präcompound mit dem Pfropfpolymerisat (Komponente B) oder einem Copolymerisat, vorzugsweise auf Styrol/Acrylnitril-Basis, eingesetzt werden. Die fluorierten Polyolefine werden als Pulver mit einem Pulver oder Granulat des Pfropfpolymerisats oder Copolymerisats vermischt und in der Schmelze im allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, der durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril und deren Gemische. Das Polymerisat wird nach saurer Fällung und nachfolgender Trocknung als rieselfähiges Pulver eingesetzt.

Die Koagulate, Präcompounds oder Masterbatches besitzen üblicherweise Feststoffgehalte an fluoriertem Polyolefin von 5 bis 95 Gew.%, vorzugsweise 7 bis 60 Gew.%.

In den erfindungsgemäßen Zusammensetzungen können Antidrippingmittel der Komponente D vorzugsweise in Mengen von 0,01 bis 5 Gew.%, noch bevorzugter von 0,01 bis 2 Gew.%, und besonders bevorzugt von 0,1 bis 0,5 Gew.%, bezogen auf die Masse der Zusammensetzung, enthalten sein.

### Komponente E

Als Komponente E enthalten die erfindungsgemäßen Zusammensetzungen mindestens einen Polyhydroxyether. Bevorzugte Polyhydroxyether sind durch Umsetzung von mindestens einem aliphatischen oder aromatischen Diol mit Epihalogenhydrin erhältlich. Bevorzugte erfindungsgemäße Zusammensetzungen enthalten 0,01 bis 10 Gew.% der Komponente E. Besonders bevorzugt ist die Komponente E in Mengen von 0,05 bis 5 Gew.%, insbesondere von 0,1 bis 3 Gew.% in den erfindungsgemäßen Polymer-Zusammensetzungen enthalten. Die vorgenannten Gewichtsprozentangaben beziehen sich jeweils auf die Masse der Polymer-Zusammensetzung.

Die Polyhydroxyether, die als Komponente E eingesetzt werden können, sind beispielsweise Kondensationsprodukte aus aliphatischen oder aromatischen Diolen mit Epihalogenhydrin. Bei den aliphatischen Diolen sind Diole mit 2 bis 10 C-Atomen, beispielsweise 1,2-Propandiol, 1,3-Propandiol, 1,4-Butandiol, 2,4-Pentandiol, 1,5-Pentandiol, 1,2-Hexandiol, 1,5-Hexandiol oder 1,6-Hexandiol bevorzugt. Unter den aromatischen Diolen sind Diphenole der Formel (I) besonders geeignet. Besonders bevorzugt wird Bisphenol-A (2,2-Di-(4-hydroxyphenyl)propan) eingesetzt.

Als Epihalogenhydrin wird insbesondere Epichlorhydrin eingesetzt. Besonders bevorzugt kommen als Komponente E Polyhydroxyether, hergestellt durch Umsetzung von Bisphenol A mit Epichlorhydrin, zum Einsatz. Daneben zählen Polyhydroxyether auf der Basis von Bisphenol S (Di-4,4'-hydroxyphenylsulfon) zu den besonders bevorzugten Komponenten E.

Ein besonders bevorzugter Polyhydroxyether ist ein solcher mit der Wiederholungseinheit der allgemeinen Formel (IV)

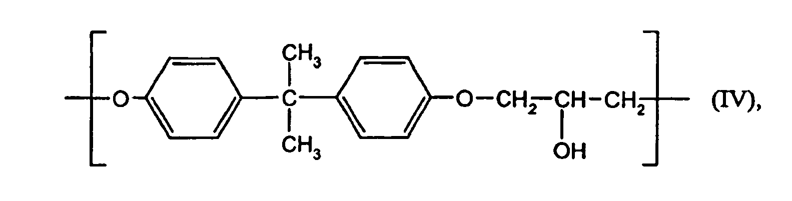

Als Endgruppen kommen beispielsweise Wasserstoff, Halogen oder beliebige organische Reste in Frage.

Die Polyhydroxyether haben im allgemeinen mittlere Molekulargewichte (Gewichtsmittelwert M_{w} bestimmt mittels Gelpermeationschromatographie) im Bereich von 10.000 bis 150.000, bevorzugt von 15.000 bis 120.000 g/mol.

Die Polyhydroxyether E sind an sich bekannt oder nach bekannten Verfahren herstellbar. Sie sind kommerziell verfügbar. Beispiele für erfindungsgemäß einsetzbare Polyhydroxyether E sind unter anderem die in der EP 0 780 438 A3 beschriebenen Polyhydroxyether.

### Komponente F

Die Komponente F umfaßt ein oder mehrere thermoplastische Vinyl(Co)Polymerisate F.1 und/oder Polyalkylenterephthalate F.2.

Geeignet sind als Vinyl(Co)Polymerisate F.1 Polymerisate von mindestens einem Monomeren aus der Gruppe der Vinylaromaten, Vinylcyanide (ungesättigte Nitrile). Insbesondere geeignet sind (Co)Polymerisate aus
F.1.1 50 bis 99, vorzugsweise 60 bis 80 Gew.-Teilen Vinylaromaten und/oder kernsubstituierten Vinylaromaten wie beispielsweise Styrol, α-Methylstyrol, p-Methylstyrol, p-Chlorstyrol) und
F.1.2 1 bis 50, vorzugsweise 20 bis 40 Gew.-Teilen Vinylcyanide (ungesättigte Nitrile) wie Acrylnitril und Methacrylnitril

Die (Co)Polymerisate C.1 sind harzartig, thermoplastisch und kautschukfrei.

Besonders bevorzugt ist das Copolymerisat aus F.1.1 Styrol und F.1.2 Acrylnitril.

Die (Co)Polymerisate gemäß F.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte M_{w} (Gewichtsmittel, ermittelt durch Lichtstreuung oder Sedimentation) zwischen 15.000 und 200.000.

Die Polyalkylenterephthalate der Komponente F.2 sind Reaktionsprodukte aus aromatischen Dicarbonsäuren oder ihren reaktionsfähigen Derivaten, wie Dimethylestem oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.%, vorzugsweise mindestens 90 Gew.%, bezogen auf die Dicarbonsäurekomponente Terephthalsäurereste und mindestens 80 Gew.%, vorzugsweise mindestens 90 Mol%, bezogen auf die Diolkomponente Ethylenglykol- und/oder Butandiol-1,4-Reste.

Die bevorzugten Polyalkylenterephthalate können neben Terephthalsäureresten bis zu 20 Mol%, vorzugsweise bis zu 10 Mol%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- oder Butandiol-1,4-Resten bis zu 20 Mol%, vorzugsweise bis zu 10 Mol%, andere aliphatische Diole mit 3 bis 12 C-Atomen oder cycloaliphatische Diole mit 6 bis 21 C-Atomen enthalten, z. B. Reste von Propandiol-1,3, 2-Ethylpropandiol-1,3, Neopentylglykol, Pentandiol-1,5, Hexandiol-1,6, Cyclohexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z. B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.%, vorzugsweise 1 bis 30 Gew.%, Polyethylenterephthalat und 50 bis 99 Gew.%, vorzugsweise 70 bis 99 Gew.%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z. B. Kunststoff-Handbuch, Band VIII, S. 695 ff., Carl-Hanser-Verlag, München 1973).

Die Komponente F kann in der erfindungsgemäßen Zusammensetzung in einer Menge von vorzugsweise 0,1 bis 60 Gew.%, besonders bevorzugt 1 bis 40 Gew.% und in am meisten bevorzugter Weise 1 bis 30 Gew.%, bezogen auf die Masse der Zusammensetzung, enthalten sein.

### Komponente G

Die Komponente G umfaßt feinstteilige anorganische Pulver.

Die erfindungsgemäß zum Einsatz kommenden feinstteiligen anorganischen Pulver G bestehen vorzugsweise aus wenigstens einem oder mehreren Metallen der 1. bis 5. Hauptgruppe oder 1. bis 8. Nebengruppe des Periodensystems, bevorzugt der 2. bis 5. Hauptgruppe oder 4. bis 8. Nebengruppe, besonders bevorzugt der 3. bis 5. Hauptgruppe oder 4. bis 8. Nebengruppe, oder aus Verbindungen dieser Metalle mit wenigstens einem Element ausgewählt aus Sauerstoff, Wasserstoff, Schwefel, Phosphor, Bor, Kohlenstoff, Stickstoff oder Silicium.

Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Aluminosilikate, Phosphate, Hydride, Phosphite oder Phosphonate.

Bevorzugt handelt es sich bei den feinstteiligen anorganischen Pulvern um Oxide, Phosphate, Hydroxide, vorzugsweise um TiO₂, SiO₂, SnO₂, ZnO, ZnS, Böhmit, ZrO₂, Al₂O₃, Aluminiumphosphate, ferner TiN, WC, Sb₂O₃ Eisenoxide, NaSO₄, Vanadiumoxide, Zinkborat, Silikate und Aluminiumsilikate, insbesondere Mg- oder Ca-Silikate, ein-, zwei-, dreidimensionale Silikate. Mischungen und dotierte Verbindungen sind ebenfalls verwendbar.

Des weiteren können diese nanoskaligen Partikel mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Besonders bevorzugt sind Titandioxid und hydrathaltige Aluminiumoxide wie Böhmit.

Ebenso bevorzugt sind mineralische Silikatverbindungen wie Talk oder Wollastonit.

Die durchschnittlichen Teilchendurchmesser der feinstteiligen Pulver sind kleiner gleich 2000 nm, bevorzugt kleiner gleich 1000 nm, insbesondere kleiner gleich 500 nm.

Teilchengröße und Teilchendurchmesser bedeutet immer den mittleren größten Teilchendurchmesser d₅₀, ermittelt, beispielsweise durch Ultrazentrifugenmessungen nach W. Scholtan et al., Kolloid-Z. und Z. Polymere 250 (1972), S. 782-796 oder durch Sedimentation.

Das anorganische Pulver wird vorzugsweise in Mengen von bis zu 5 Gew.%, vorzugsweise 0,01 bis 2 Gew.%, besonders bevorzugt 0,01 bis 1 Gew.%, bezogen auf das thermoplastische Material, in die thermoplastische Polymer-Zusammensetzung eingearbeitet.

Gemäß einer bevorzugten Ausführungsform der Erfindung wird als feinstteiliges anorganisches Pulver Böhmit oder Talk mit einer mittleren Partikelgröße von kleiner etwa 2000 nm eingesetzt.

Die anorganischen Verbindungen können als Pulver, Pasten, Sole Dispersionen oder Suspensionen vorliegen. Durch Ausfällen können aus Dispersionen, Sole oder Suspensionen Pulver erhalten werden.

Die Pulver können nach üblichen Verfahren in die thermoplastischen Polymer-Zusammensetzungen eingearbeitet werden, beispielsweise durch direktes Kneten oder Extrudieren von Polymer-Zusammensetzungen und den feinstteiligen anorganischen Pulvern.

### Komponente H

Die erfindungsgemäßen Polymer-Zusammensetzungen können bis zu 20 Gew.%, bevorzugt 0,01 bis 10 Gew.%, bezogen auf die Masse der Zusammensetzung, wenigstens eines der üblichen Polymer-Additive, wie Gleit- und Entformungsmittel, beispielsweise Pentaerythrittetrastearat, Nukleiermittel, Antistatika, Stabilisatoren, Füll- und Verstärkungsstoffe sowie Farbstoffe und Pigmente, enthalten.

Die erfindungsgemäßen Polymer-Zusammensetzungen können bis zu 20 Gew.%, bezogen auf die Gesamt-Polymer-Zusammensetzung, eines weiteren, gegebenenfalls synergistisch wirkenden Flammschutzmittels enthalten. Beispielhaft werden als weitere Flammschutzmittel organische Halogenverbindungen wie Decabrombisphenylether, Tetrabrombisphenol-A, anorganische Halogenverbindungen wie Ammoniumbromid, Stickstoffverbindungen, wie Melamin, Melaminformaldehyd-Harze, anorganische Hydroxidverbindungen wie Mg, Al-Hydroxid, anorganische Verbindungen wie Antimonoxide, Bariummetaborat, Hydroxoantimonat, Zirkonoxid, Zirkonhydroxid, Molybdänoxid, Ammoniummolybdat, Zinkborat, Ammoniumborat, Bariummetaborat, Talk, Wollastonit, Mica, Siliciumoxid und Zinnoxid sowie Siloxanverbindungen genannt. Als zusätzliche Flammschutzmittel können weiterhin auch von Komponente C verschiedene Oligophosphate oder monomere organische Phosphorsäureesster oder Phosphonatamine oder Phosphazene eingesetzt werden.

Die Summe der Gew.% aller in den Zusammensetzungen enthaltenen Bestandteile ergibt 100.

Die erfindungsgemäßen Polymer-Zusammensetzungen, enthaltend die Komponenten A bis E und gegebenenfalls weitere Komponenten, werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Gegenstand der Erfindung ist daher auch ein Verfahren zur Herstellung der Polymer-Zusammensetzungen.

Die erfindungsgemäßen Polymer-Zusammensetzungen können zur Herstellung von Formkörpern jeder Art verwendet werden. Diese können durch Spritzguß, Extrusion und Blasformverfahren hergestellt werden. Eine weitere Form der Verarbeitung ist die Herstellung von Formkörpern durch Tiefziehen aus zuvor hergestellten Platten oder Folien.

Beispiele für solche Formkörper sind Folien, Profile, Gehäuseteile jeder Art, z.B. für Haushaltsgeräte wie Saftpressen, Kaffeemaschinen, Mixer; für Büromaschinen wie Monitore, Drucker, Kopierer; Platten, Rohre, Elektroinstallationskanäle, Fensterprofile, Türprofile und andere Profile für den Bausektor (Innenausbau und Außenanwendungen) sowie Elektro- und Elektronikteile wie Schalter, Stecker und Steckdosen.

Insbesondere können die erfindungsgemäßen Polymer-Zusammensetzungen beispielsweise zur Herstellung von folgenden Formkörpern bzw. Formteilen verwendet werden:

Innenausbauteile für Schienenfahrzeuge, Schiffe, Flugzeuge, Busse und andere Kraftfahrzeuge, Gehäuse von Kleintransformatoren enthaltenden Elektrogeräten, Gehäuse für Geräte zur Informationsverarbeitung und -übermittlung, Gehäuse und Verkleidung von medizinischen Geräten, Massagegeräte und Gehäuse dafür flächige Wandelemente, Gehäuse für Sicherheitseinrichtungen und wärmeisolierte Transportbehältnisse.

Ein weiterer Gegenstand der vorliegenden Erfindung ist daher auch die Verwendung der erfindungsgemäßen Polymer-Zusammensetzungen zur Herstellung von Formkörpern jeglicher Art, vorzugsweise der oben genannten, sowie die Formkörper aus den erfindungsgemäßen Polymer-Zusammensetzungen.

Im folgenden wird die Erfindung anhand von Ausführungsbeispielen näher beschrieben.

### Beispiele

Entsprechend den Angaben in Tabelle 1 werden drei Polycarbonat-Zusammensetzungen hergestellt, zu Prüfkörpern weiterverarbeitet und geprüft.

### Komponente A

Lineares Polycarbonat auf Basis von Bisphenol-A mit einer relativen Lösungsviskosität von 1,25, gemessen in CH₂Cl₂ als Lösungsmittel bei 25°C und in einer Konzentration von 0,5 g/100 ml.

### Komponente B

Pfropfpolymerisat von 84 Gew.-Teilen eines Copolymerisats aus Styrol und Acrylnitril im Verhältnis von 73:27 auf 16 Gew.-Teile vernetzten Polybutadienkautschuk, hergestellt durch Massepolymerisation.

### Komponente C

Auf Bisphenol-A basierendes Oligophosphat:

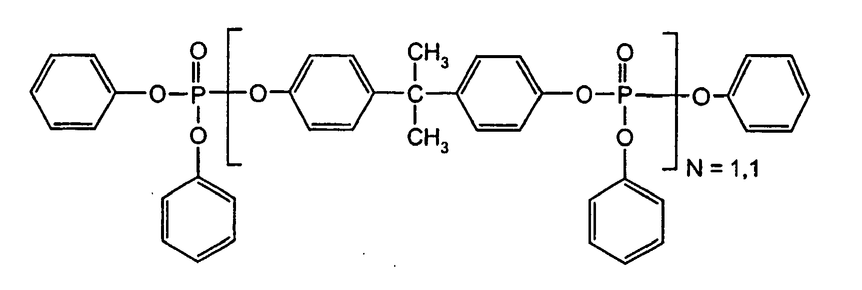

### Komponente D

Tetrafluorethylenpolymerisat als koagulierte Mischung aus einer wässrigen Emulsion eines Pfropfpolymerisats von etwa 40 Gew.-Teilen eines Copolymerisats aus Styrol und Acrylnitril im Verhältnis von 73:27 auf 60 Gew.-Teilen teilchenförmigen vernetzten Polybutadienkautschuks (mittlerer Teilchendurchmesser d₅₀ = 0,3 µm, hergestellt durch Emulsionspolymerisation, und einer Tetrafluorethylenpolymerisat-Emulsion in Wasser. Das Gewichtsverhältnis von Pfropfpolymerisat zum Tetrafluorethylenpolymerisat in der Mischung ist 90 Gew.% zu 10 Gew.%. Die Tetrafluorethylenpolymerisat-Emulsion besitzt einen Feststoffgehalt von 60 Gew.%, der mittlere Teilchendurchmesser liegt zwischen 0,05 und 0,5 µm. Die SAN-Pfropfpolymerisat-Emulsion besitzt einen Feststoffgehalt von 34 Gew.%.

Die Emulsion des Tetrafluorethylenpolymerisats (Teflon^{®} 30 N der Fa. DuPont, USA) wird mit der Emulsion des SAN-Pfropfpolymerisats vermischt und mit 1,8 Gew.%, bezogen auf Polymerfeststoff, phenolischer Antioxidantien stabilisiert. Bei 85 bis 95°C wird die Mischung mit einer wäßrigen Lösung von MgSO₄ (Bittersalz) und Essigsäure bei pH 4 bis 5 koaguliert, filtriert und bis zur praktischen Elektrolytfreiheit gewaschen, anschließend durch Zentrifugation von der Hauptmenge Wasser befreit und danach bei 100°C zu einem Pulver getrocknet.

### Komponente E

YP-50: Polyhydroxyether/Phenoxyharz hergestellt aus Bisphenol-A und Epichlorhydrin mit einem Molekulargewicht M_{w} von 56,500 und einem M_{w}/Mₙ-Verhältnis von 5,38 (Tohto Kasei Co., LTD., Tokyo, Japan).

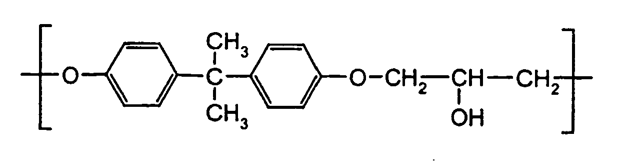

### Komponente H1

Pentaerythrittetrastearat als Entformungsmittel

### Komponente H2

Phosphitstabilisator

### Herstellung und Prüfung der erfindungsgemäßen Polymer-Zusammensetzungen

Das Mischen der Komponenten der Zusammensetzungen erfolgt mit einer ZSK 25 (Werner/Pfleiderer). Die Formkörper wurden auf einer Spritzgießmaschine vom Typ Arburg 270 E bei 240°C hergestellt.

Das Bruchbild (die Duktilität) der Formmasse wird im Schlagversuch mit gekerbtem Probekörper gemäß der Vorschrift ISO 180-1 A bestimmt.

Die Bestimmung der Wärmeformbeständigkeit nach Vicat B erfolgt gemäß DIN 53 460 (ISO 306) an Stäben der Abmessung 80 mm x 10 mm x 4 mm.

Die Schmelzeviskosität wird bei 260°C und einer Scherrate von 1.000 s⁻¹ gemäß DIN 54811 bestimmt.

Das Spannungsrißverhalten (ESC-Verhalten) wird an Stäben der Abmessung 80 mm x 10 mm x 4 mm untersucht. Als Testmedium wird eine Mischung aus 60 Vol.% Toluol und 40 Vol.-% Isopropanol verwendet. Die Probekörper werden mittels einer Kreisbogenschablone vorgedehnt, wobei die Dehnung 2,4 % beträgt, und bei Raumtemperatur im Testmedium gelagert. Das Spannungsrißverhalten wird anhand der Zeit bis zum Bruch des Prüfstabs beurteilt.

Das Brandverhalten der Proben wird im UL 94 V-Flammwidrigkeitstest an Stäben der Abmessung 127 mm x 12,7 mm x 1,2 mm beurteilt. Bestimmt wird die Gesamtnachbrennzeit, die für die Bewertung "V0" 50 Sekunden nicht übersteigen darf.

**Tabelle 1**

| **Formmasse/Komponenten** | **V1** | **1** | **2** |
|---|---|---|---|
| A (Polycarbonat) | 66,4 | 66,4 | 66,4 |
| B (Pfropfpolymerisat) | 16,1 | 16,1 | 16,1 |
| C (Oligophosphat) | 12,5 | 12,5 | 12,5 |
| D (Antidrippingmittel) | 4,5 | 4,5 | 4,5 |
| E (Polyhydroxyether) | - | 0,5 | 1,5 |
| H1 (Additiv) | 0,4 | 0,4 | 0,4 |
| H2 (Additiv) | 0,1 | 0,1 | 0,1 |
| **Eigenschaften:** | | | |
| Bruchbild im Schlagversuch gemäß ISO 180-1 A | zäh | zäh | zäh |
| Vicat B 120 [°C] | 98 | 98 | 98 |
| Schmelzeviskosität (260°C/1000s⁻¹) [Pas] | 161 | 160 | 149 |
| ESC (Zeit bis zum Bruch bei εₓ=2,4 %) [min] | 12 | 18 | 27 |
| Gesamtnachbrennzeit im UL94 V-Test bei 1,2 mm | 78 | 62 | 47 |
| Gesamtnachbrennzeit im UL94 V-Test bei 1,6 mm | 10 | 9 | 10 |

Bei der Wandstärke 1,5 mm erfüllen die erfindungsgemäßen Formmassen 1 und 2 beide die Anforderungen an eine V-0-Bewertung im UL 94-V-Test.

Die im unteren Teil von Tabelle 1 dargestellten Ergebnisse zeigen, daß die erfindungsgemäßen Polymer-Zusammensetzungen 1 und 2 ein deutlich verbessertes ESC-Verhalten, eine kürzere Gesamtnachbrennzeit im UL94 V-Test sowie eine verbesserte Fließfähigkeit (ausgedrückt durch die Schmelzeviskosität) im Vergleich zu der Vergleichszusammensetzung V1, die keinen Polyhydroxyether enthält, aufweisen. Die Ergebnisse des Schlagversuchs gemäß ISO 180-1 A zeigen ferner, daß die Duktilität der erfindungsgemäßen Zusammensetzungen 1 und 2 trotz Zugabe von Polyhydroxyether unverändert gut bleibt. Die Ergebnisse des Vicat B-Tests zeigen darüber hinaus, daß der Polyhydroxyether keine weichmachende Wirkung in Bezug auf die Wärmeformbeständigkeit hat.

## Patentansprüche

1. Polycarbonat-Zusammensetzung bestehend aus
(A) mindestens ein aromatisches Polycarbonat und/oder Polyestercarbonat,
(B) mindestens ein Pfropfpolymerisat von
B.1 5 bis 95 Gew.% eines Gemisches aus
B.1.1 50 bis 99 Gew.-Teilen Vinylaromaten und/oder kernsubstituierten Vinylaromaten und
B.1.2 1 bis 50 Gew.-Teilen Vinylcyanide
auf
B.2 95 bis 5 Gew.% einer oder mehrerer Pfropfgrundlagen ausgewählt aus der Gruppe bestehend aus Dienkautschuke, EP(D)M-Kautschuke, Polyurethan-, Silikon-, Chloropren- und Ethylen/Vinylacetat-Kautschuke mit Glasübergangstemperaturen < 10°C,
(C) mindestens eine Phosphorverbindung der allgemeinen Formel 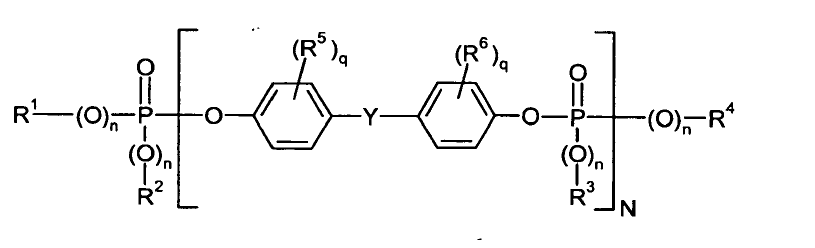 in der die Reste
R¹, R², R³ und R⁴, unabhängig voneinander, gegebenenfalls durch Halogen substituiertes C₁ bis C₈-Alkyl, jeweils gegebenenfalls durch Halogen und/oder Alkyl substituiertes C₅ bis C₆-Cycloalkyl, C₆ bis C₁₀-Aryl oder C₇ bis C₁₂-Aralkyl,
n unabhängig voneinander 0 oder 1,
q unabhängig voneinander 0, 1, 2, 3 oder 4,
N 0,5 bis 30,
R⁵ und R⁶ unabhängig voneinander C₁ bis C₄-Alkyl, oder Halogen, und
Y C₁ bis C₇-Alkyliden, C₁ bis C₇-Alkylen, C₅ bis C₁₂-Cycloalkylen, C₅ bis C₁₂-Cycloalkyliden, -O-, -S-, -SO-, -SO₂- oder -CO- bedeuten,
(D) mindestens ein Antidrippingmittel und
(E) mindestens einen Polyhydroxyether,
(F) gegebenenfalls ein thermoplastisches Vinyl(Co)Polymerisat aus
F.1.1 50 bis 99 Gew.-Teilen Vinylaromaten und/oder kernsubstituierten Vinylaromaten und
F.1.2 1 bis 50 Gew.-Teilen Vinylcyanide (ungesättigte Nitrile).
und/oder Polyalkylenterephthalat,
(G) gegebenenfalls ein feinstteiliges anorganisches Pulver enthalten, und
(H) gegebenenfalls ein Polymer-Additiv, ausgewählt aus Gleit- und Entformungsmitteln, Nukleiermitteln, Antistatika, Stabilisatoren, Füll- und Verstärkungsstoffen sowie Farbstoffen und Pigmenten.

2. Zusammensetzung nach Anspruch 1, worin Komponente A in einer Menge von 5 bis 98,9 Gew.%, bezogen auf die Zusammensetzung, enthalten ist.

3. Zusammensetzung nach Anspruch 1, worin Komponente A in einer Menge von 10 bis 90 Gew.%, bezogen auf die Zusammensetzung, enthalten ist.

4. Zusammensetzung nach Anspruch 1, worin Komponente A in einer Menge von 40 bis 80 Gew.%, bezogen auf die Zusammensetzung, enthalten ist.

5. Zusammensetzung nach einem der vorangegangenen Ansprüche, worin Komponente B in einer Menge von 1 bis 94,9 Gew.%, bezogen auf die Zusammensetzung, enthalten ist.

6. Zusammensetzung nach einem der vorangegangenen Ansprüche, worin Komponente B in einer Menge von 2 bis 40 Gew.%, bezogen auf die Zusammensetzung, enthalten ist.

7. Zusammensetzung nach einem der vorangegangenen Ansprüche, worin als Pfropfpolymerisat ein Emulsions- oder Masse-ABS oder eine Mischung derselben enthalten ist.

8. Zusammensetzung nach einem der vorangegangenen Ansprüche, worin Komponente C in einer Menge von 0,01 bis 40 Gew.%, bezogen auf die Zusammensetzung, enthalten ist.

9. Zusammensetzung nach einem der vorangegangenen Ansprüche, worin Komponente C in einer Menge von 1 bis 25 Gew.%, bezogen auf die Zusammensetzung, enthalten ist.

10. Zusammensetzung nach einem der vorangegangenen Ansprüche, worin Komponente D in einer Menge von 0,01 bis 5 Gew.%, bezogen auf die Zusammensetzung, enthalten ist.

11. Zusammensetzung nach einem der vorangegangenen Ansprüche, worin Komponente D in einer Menge von 0,01 bis 2 Gew.%, bezogen auf die Zusammensetzung, enthalten ist.

12. Zusammensetzung nach einem der vorangegangenen Ansprüche, worin Komponente D mindestens eine fluorierte Polyolefin-Verbindung ausgewählt aus der Gruppe von Polytetrafluorethylen, Polyvinylidenfluorid, Tetrafluorethylen/Hexafluorpropylen- und Ethylen/Tetrafluorethylen-Copolymerisaten umfaßt.

13. Zusammensetzung nach einem der vorangegangenen Ansprüche, worin Komponente E in einer Menge von 0,01 bis 10 Gew.%, bezogen auf die Zusammensetzung, enthalten ist.

14. Zusammensetzung nach einem der vorangegangenen Ansprüche, worin Komponente E in einer Menge von 0,05 bis 5 Gew.%, bezogen auf die Zusammensetzung, enthalten ist.

15. Zusammensetzung nach einem der vorangegangenen Ansprüche, worin Komponente E in einer Menge von 0,1 bis 3 Gew.%, bezogen auf die Zusammensetzung, enthalten ist.

16. Zusammensetzung nach einem der vorangegangenen Ansprüche, worin der Polyhydroxyether eine Wiederholungseinheit der allgemeinen Formel (IV) enthält,

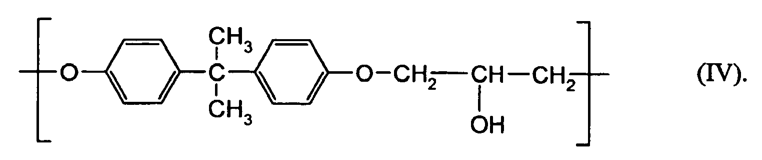

17. Zusammensetzung nach nach einem der vorangegangenen Ansprüche, worin als feinstteiliges anorganisches Pulver Böhmit oder Talk mit einer mittleren Partikelgröße von kleiner etwa 2000 nm eingesetzt wird.

18. Verfahren zur Herstellung einer Zusammensetzung nach einem der Ansprüche 1 bis 17, worin die Komponenten A bis E sowie gegebenenfalls weitere Komponenten miteinander vermischt und bei Temperaturen von 200 bis 300°C in üblichen Aggregaten wie Innenknetern, Extrudern und Doppelwellenschnecken schmelzcompoundiert und schmelzextrudiert werden.

19. Verwendung einer Zusammensetzung nach einem der Ansprüche 1 bis 17 zur Herstellung von Formkörpern.

20. Formkörper, enthaltend eine Zusammensetzung nach einem der Ansprüche 1 bis 17.

21. Formkörper nach Anspruch 20, wobei der Formkörper ein Teil eines Kraftfahrzeugs, Schienenfahrzeugs, Luftfahrzeugs oder Wasserfahrzeugs, ein Gehäuse für ein Haushaltsgerät, eine Büromaschine oder ein einen Kleintransformator enthaltendes Gerät, ein Elektro- oder Elektronikteil oder eine Platte, ein Profil oder ein flächiges Element für eine Bauinnen- oder -außenanwendung ist.

## Claims

1. Polycarbonate composition comprising
(A) at least one aromatic polycarbonate and/or polyester carbonate,
(B) at least one graft polymer of
B.1 5-95 wt.% of a mixture of
B.1.1 50-99 parts by weight of vinyl aromatic compounds and/or nuclear substituted vinyl aromatic compounds, and
B.1.2 1-50 parts by weight of vinyl cyanides
on
B.2 95-5 wt.% of one or more graft bases selected from the group comprising diene rubbers, EP(D)M rubbers, polyurethane, silicone, chloroprene and ethylene/vinyl acetate rubbers with glass transition temperatures < 10°C,
(C) at least one phosphorus compound of the general formula 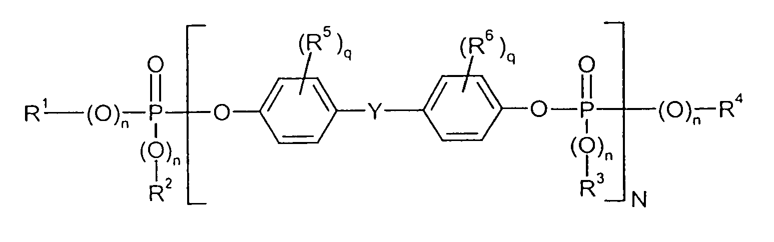 in which the radicals
R¹, R², R³ and R⁴ independently of one another denote C₁ to C₈ alkyl optionally substituted by halogen, C₅ to C₆ cycloalkyl, C₆ to C₁₀ aryl or C₇ to C₁₂ aralkyl in each case optionally substituted by halogen and/or alkyl,
n independently of one another is 0 or 1,
q independently of one another is 0, 1, 2, 3 or 4,
N is 0.5 to 30,
R⁵ and R⁶ independently of one another denote C₁ to C₄ alkyl or halogen, and
Y denotes C₁ to C₇ alkylidene, C₁ to C₇ alkylene, C₅ to C₁₂ cycloalkylene, C₅ to C₁₂ cycloalkylidene, -O-, -S-, -SO-, -SO₂- or -CO-,
(D) at least one anti-drip agent and
(E) at least one polyhydroxy ether,
(F) optionally a thermoplastic vinyl (co)polymer of
F.1.1 50-99 parts by weight of vinyl aromatic compounds and/or nuclear-substituted vinyl aromatic compounds and
F.1.2 1-50 parts by weight of vinyl cyanides (unsaturated nitriles)
and/or
polyalkylene terepthalate,
(G) optionally a very finely particulate inorganic powder, and
(H) optionally a polymer additive selected from lubricants and mould release agents, nucleating agents, antistatics, stabilisers, fillers and reinforcing substances, as well as dyes and pigments.

2. Composition according to claim 1, wherein component A is contained in an amount of 5 to 98.9 wt.% referred to the composition.

3. Composition according to claim 1, wherein component A is contained in an amount of 10 to 90 wt.% referred to the composition.

4. Composition according to claim 1, wherein component A is contained in an amount of 40 to 80 wt.% referred to the composition.

5. Composition according to any one of the preceding claims, wherein component B is contained in an amount of 1 to 94.9 wt.% referred to the composition.

6. Composition according to any one of the preceding claims, wherein component B is contained in an amount of 2 to 40 wt.% referred to the composition.

7. Composition according to any one of the preceding claims, wherein an emulsion or bulk ABS or a mixture thereof is contained as graft polymer.

8. Composition according to any one of the preceding claims, wherein component C is contained in an amount of 0.01 to 40 wt.% referred to the composition.

9. Composition according to any one of the preceding claims, wherein component C is contained in an amount of 1 to 25 wt.% referred to the composition.

10. Composition according to any one of the preceding claims, wherein component D is contained in an amount of 0.01 to 5 wt.% referred to the composition.

11. Composition according to any one of the preceding claims, wherein component D is contained in an amount of 0.01 to 2 wt.% referred to the composition.

12. Composition according to any one of the preceding claims, wherein component D is at least one fluorinated polyolefin compound selected from the group consisting of polytetrafluoroethylene, polyvinylidene fluoride or tetrafluoroethylene/hexafluoropropylene copolymers and ethylene/tetrafluoroethylene copolymers.

13. Composition according to any one of the preceding claims, wherein component E is contained in an amount of 0.01 to 10 wt.% referred to the composition.

14. Composition according to any one of the preceding claims, wherein component E is contained in an amount of 0.05 to 5 wt.% referred to the composition.

15. Composition according to any one of the preceding claims, wherein component E is contained in an amount of 0.1 to 3 wt.% referred to the composition.

16. Composition according to any one of the preceding claims, wherein the polyhydroxy ether contains a repeating unit of the general formula (IV)

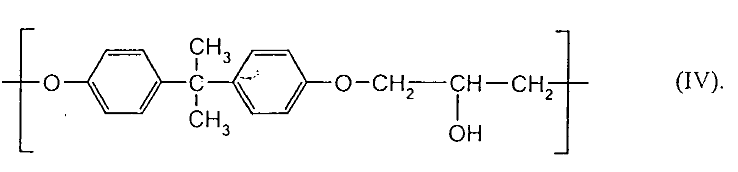

17. Composition according to any one of the preceding claims, wherein boehmite or talcum with a mean particle size of less than about 2000 nm is used as very finely particulate inorganic powder.

18. Process for the production of a composition according to any one of claims 1 to 17, wherein the components A to E as well as optionally further components are mixed with one another and are melt-compounded and melt-extruded at temperatures of 200°C to 300°C in conventional units such as internal kneaders, extruders and double-shaft screw extruders.

19. Use of a composition according to any one of claims 1 to 17 for the production of moulded articles.

20. Moulded article containing a composition according to any one of claims 1 to 17.

21. Moulded article according to claim 20, wherein the said moulded article is a part of a road vehicle, track vehicle, aircraft or water vehicle, a housing for a domestic appliance, an office machine or an item of equipment containing a small transformer, an electrical or electronics part, or a sheet, profiled section or a two-dimensional unit for internal or external structural use.

## Revendications

1. Composition de polycarbonate se composant de
(A) au moins un polycarbonate et/ou un polyestercarbonate aromatique,
(B) au moins un polymère greffé de
B.1 5 à 95 % en poids d'un mélange de
B.1.1 50 à 99 parties en poids de composés vinylaromatiques et/ou de composés vinylaromatiques substitués au niveau du noyau et de
B.1.2 1 à 50 parties en poids de cyanures de vinyle
sur
B.2 95 à 5 % en poids d'une ou de plusieurs bases de greffage sélectionnées parmi le groupe constitué des caoutchoucs diènes, des caoutchoucs EP(D)M, des caoutchoucs de polyuréthane, de silicone, de chloroprène et d'éthylène/acétate de vinyle présentant une température de transition vitreuse inférieure à 10 °C,
(C) au moins un composé phosphoré de la formule générale 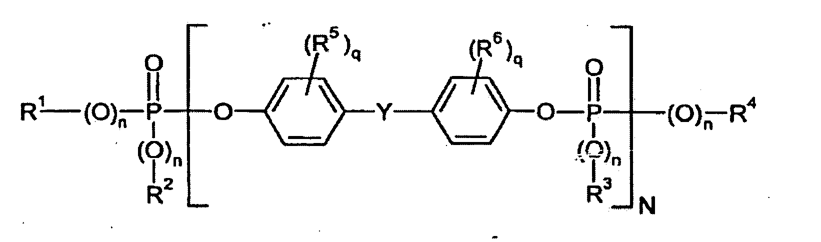 dans laquelle les radicaux
R¹, R², R³ et R⁴ représentent, indépendamment les uns des autres, un alkyle en C₁ à C₈ substitué le cas échéant par un halogène, un cycloalkyle en C₅ à C₆, un aryle en
C₆ à C₁₀ ou un aralkyle en C₇ à C₁₂, chacun substitué le cas échéant par un halogène et/ou un alkyle,
les n correspondent à 0 ou à 1 indépendamment les uns des autres,
les q équivalent, indépendamment les uns des autres, à 0, 1, 2, 3 ou 4
N correspond à 0,5 à 30,
R⁵ et R⁶ représentent, indépendamment les uns des autres, un alkyle en C₁ à C₄ ou un halogène et
Y est un alkylidène en C₁ à C₇, un alkylène en C₁ à C₇, un cycloalkylène en C₅ à C₁₂, un cycloalkylidène en C₅ à C₁₂, -O-, -S-, -SO-, SO₂ ou -CO,
(D) au moins un agent antiégouttement et
(E) au moins un polyhydroxyéther,
(F) le cas échéant, un (co)polymère de vinyle thermoplastique, se composant de
F.1.1 50 à 99 parties en poids de composés vinylaromatiques et/ou de composés vinylaromatiques substitués au niveau du noyau et
F.1.2 1 à 50 parties en poids de cyanures de vinyle (nitriles insaturés),
et/ou un polyalkylènetéréphtalate,
(G) le cas échéant, une poudre inorganique ultrafine et
(H) le cas échéant, un additif pour polymère, sélectionné parmi les agents lubrifiants et les agents de démoulage, les agents de nucléation, les antistatiques, les stabilisants, les charges et les substances de renforcement, ainsi que les colorants et les pigments.

2. Composition selon la revendication 1, dans laquelle le composant A est contenu dans une proportion de 5 à 98,9 % en poids par rapport à la composition.

3. Composition selon la revendication 1, dans laquelle le composant A est contenu dans une proportion de 10 à 90 % en poids par rapport à la composition.

4. Composition selon la revendication 1, dans laquelle le composant A est contenu dans une proportion de 40 à 80 % en poids par rapport à la composition.

5. Composition selon une des revendications précédentes, dans laquelle le composant B est contenu dans une proportion de 1 à 94,9 % en poids, par rapport à la composition.

6. Composition selon une des revendications précédentes, dans laquelle le composant B est contenu dans une proportion de 2 à 40 % en poids, par rapport à la composition.

7. Composition selon une des revendications précédentes, dans laquelle un polymère ABS en émulsion ou en masse ou un mélange de ceux-ci est contenu comme polymère greffé.

8. Composition selon une des revendications précédentes, dans laquelle le composant C est contenu dans une proportion de 0,01 à 40 % en poids, par rapport à la composition.

9. Composition selon une des revendications précédentes, dans laquelle le composant C est contenu dans une proportion de 1 à 25 % en poids, par rapport à la composition.

10. Composition selon une des revendications précédentes, dans laquelle le composant D est contenu dans une proportion de 0,01 à 5 % en poids, par rapport à la composition.

11. Composition selon une des revendications précédentes, dans laquelle le composant D est contenu dans une proportion de 0,01 à 2 % en poids, par rapport à la composition.

12. Composition selon une des revendications précédentes, dans laquelle le composant D contient au moins un composé polyoléfinique fluoré sélectionné parmi le groupe du polytétrafluoréthylène, du fluorure de polyvinylidène, des copolymères de tétrafluoréthylène/hexafluoropropylène et d'éthylène/tétrafluoréthylène.

13. Composition selon une des revendications précédentes, dans laquelle le composant E est contenu dans une proportion de 0,01 à 10 % en poids, par rapport à la composition.

14. Composition selon une des revendications précédentes, dans laquelle le composant E est contenu dans une proportion de 0,05 à 5 % en poids, par rapport à la composition.

15. Composition selon une des revendications précédentes, dans laquelle le composant E est contenu dans une proportion de 0,1 à 3 % en poids, par rapport à la composition.

16. Composition selon une des revendications précédentes dans laquelle le polyhydroxyéther contient une unité de répétition de la formule générale (IV),

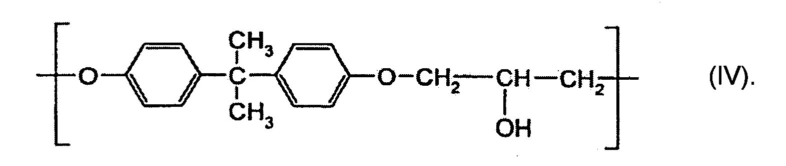

17. Composition selon une des revendications précédentes dans laquelle de la boehmite ou du talc avec une grosseur de particule moyenne inférieure à environ 2000 nm est mise en oeuvre comme poudre inorganique ultrafine.

18. Procédé de préparation d'une composition selon une des revendications 1 à 17, dans lequel les composants A à E ainsi que, le cas échéant, d'autres composants sont mélangés ensemble et compoundés et extrudés dans la masse fondue à des températures comprises entre 200 et 300 °C dans des dispositifs usuels tels que pétrisseurs internes, boudineuses et extrudeuses à deux vis.

19. Utilisation d'une composition selon une des revendications 1 à 17 pour la production de pièces moulées.

20. Pièce moulée contenant une composition selon une des revendications 1 à 17.

21. Pièce moulée selon la revendication 20, faisant partie d'un véhicule automobile, d'un véhicule sur rails, d'un aéronef ou d'un navire, d'un boîtier ou d'un coffret pour un appareil ménager, une machine de bureau ou un appareil contenant un petit transformateur, un composant électrique ou électronique ou une plaque, un profilé ou un élément plat destiné à l'utilisation intérieure ou extérieure dans la construction.
